# EUROPÄISCHE PATENTANMELDUNG

(11) **EP 2 347 885 A2**
(43) Veröffentlichungstag der Anmeldung: **27.07.2011**
(21) Anmeldenummer: 10194952.7
(22) Anmeldetag: 14.12.2010
(51) Int. Cl.: B29C 49/24, B29C 49/36, B29C 49/06

(54) **Etikettiervorrichtung und -verfahren zum Etikettieren von Kunststoffbehältern in der Blasform in einer Rundläufer-Blasmaschine**

(30) Priorität: 25.01.2010 DE 102010001192
(71) Anmelder: Krones AG, 93073 Neutraubling (DE)
(72) Erfinder: Hausladen, Wolfgang, 93099, Mötzing (DE); Popp, Christian, 93059, Regensburg (DE); Weiß, Johannes, 93149, Nittenau (DE)
(74) Vertreter: Grünecker, Kinkeldey, Stockmair & Schwanhäusser Anwaltssozietät

(57) **Zusammenfassung**

Die Erfindung betrifft eine Etikettiervorrichtung zum Etikettieren von Kunststoffbehältern in der Blasform sowie ein Etikettierverfahren zur Verwendung der erfindungsgemäßen Etikettiervorrichtung. Dadurch, dass die rotierende Einlegevorrichtung der Etikettiervorrichtung Gelenkarme umfasst, an denen jeweils ein Greifer drehbar gelagert ist, können Etiketten bei vergleichsweise geringer Relativgeschwindigkeit aus feststehenden Magazinen entnommen werden. Ebenso können die Gelenkarme der Bahnkurve der Blasformen beim Einlegen der Etiketten mit hoher Geschwindigkeit folgen. Gleichzeitig ermöglicht die drehbare Lagerung der Greifer eine exakte radiale Orientierung des Greifers bezüglich der Drehachse des sich während des Etiketteinlegens weiter drehenden Blasrads. Dies ermöglicht eine besonders genaue und zuverlässige Etikettierung.

## Beschreibung

Die Erfindung betrifft eine Etikettiervorrichtung zum Etikettieren von Kunststoffbehältern in der Blasform nach dem Oberbegriff des Anspruchs 1, sowie ein Etikettierverfahren nach Anspruch 13 zur Verwendung der erfindungsgemäßen Etikettiervorrichtung.

Kunststoffbehälter können bekanntermaßen bereits während der Herstellung durch sogenanntes In-Mould-Labelling etikettiert werden, indem die Etiketten vor dem Blasen der Behälter in die Blasform eingebracht werden.

Bei Rundläufermaschinen werden die Etiketten beispielsweise, wie in der US 6.649.119 B2 beschrieben, von rotierenden Transferpaletten aus feststehenden Magazinen entnommen, an ein zwischen dem Einlaufrad und dem Auslaufrad angeordnetes Übergaberad mit radial verschiebbaren und drehbaren Transferarmen übergeben und von diesen in die geöffnete Blasform eingebracht. Nachteilig ist jedoch nicht nur der Aufwand für die separaten Transferpaletten zur Etikettenentnahme sondern auch, dass einerseits nur ein kleiner Maschinenwinkelbereich für das Einlegen der Etiketten in die Blasformen genutzt werden kann, andererseits der für das Blasen verfügbare Maschinenwinkelbereich in unerwünschtem Maße beschnitten wird. Somit ist die Produktionsleistung der Vorrichtung unbefriedigend.

Die US 5.266.149 A beschreibt ein Etikettiersystem für eine Rundläufer-Blasmaschine, bei dem pro Formhälfte ein Etikettenmagazin und ein Transferarm direkt am Blasrad angeordnet sind. Nachteilig ist jedoch die große Anzahl benötigter Magazine, Transfersysteme und die schlechte Zugänglichkeit der Magazine am Blasrad während der Produktion.

Die WO 00 785 26 A1 beschreibt ein feststehendes Etikettiersystem, das zwei voneinander weg weisende Greifer oszillatorisch zwischen zwei feststehenden Etikettenmagazinen und zwei Blasformhälften eines Blasrads auf- und ab bewegt, wobei die Greifer an den Umkehrpunkten zunächst horizontal voneinander weg bewegt werden, um die Etiketten aus den Magazinen aufzunehmen bzw. in die Blasformhälften einzulegen und anschließend wieder aufeinander zu bewegt werden, um zwischen den Umkehrpunkten zu wechseln. Eine solche Taktmaschine hat jedoch den Nachteil, dass mit ihr keine ausreichende Produktionsleistung erreicht werden kann.

Es ist daher Aufgabe der Erfindung, eine Vorrichtung und ein Verfahren zur Etikettierung in der Blasform ohne diese Nachteile bereitzustellen.

Diese Aufgabe wird dadurch gelöst, dass die rotierende Einlegevorrichtung der Etikettiervorrichtung Gelenkarme umfasst, an denen jeweils ein Greifer drehbar gelagert ist. Mit Hilfe der Gelenkarme können Etiketten bei vergleichsweise geringer Relativgeschwindigkeit aus feststehenden Magazinen entnommen werden. Ebenso können die Gelenkarme der Bahnkurve der Blasformen beim Einlegen der Etiketten mit hoher Geschwindigkeit folgen. Gleichzeitig ermöglicht die drehbare Lagerung der Greifer eine exakte radiale Orientierung des Greifers bezüglich der Drehachse des sich während des Etiketteinlegens weiter drehenden Blasrads. Dies erhöht die Genauigkeit und Zuverlässigkeit der Etikettierung.

Vorzugsweise umfasst der Greifer gegen die Blasform schwenkbare Greifelemente. Dies ermöglicht bei vergleichsweise einfachem und leichtem Aufbau des Greifers, dass der Greifer bei minimalen Abmessungen in die Blasform eingeschwenkt werden kann und die Etiketten anschließend mit der Innenwand der Blasform in Kontakt gebracht werden können.

Vorzugsweise sind die Greifelemente als Negativ eines Abschnitts der Blasform ausgeformt. Dadurch lässt sich ein größtmöglicher Anteil der Etikettenfläche mit der Blasform in Kontakt bringen. Dies erhöht die Haftung insbesondere bei elektrostatischer Aufladung.

Bei einer besonders günstigen Ausgestaltung umfasst der Greifer eine Zentrierspitze, die den Greifer in der Blasform mittig ausrichtet. Dadurch wird gewährleistet, dass der Greifer während des Einlegens eine im Wesentlichen gleichbleibende Position in der Blasform beibehält.

Vorzugsweise ist die Drehlage des Greifers beim Einschwenken in die Blasform bezüglich des Gelenkarms fixierbar. Dadurch kann der Greifer in der Blasform besonders schnell und zuverlässig zentriert werden.

Vorzugsweise ist die Einlegevorrichtung so eingerichtet, dass sie die Etiketten direkt aus dem Etikettenmagazin entnimmt. Dadurch kann eine besonders Platz sparende Anordnung realisiert werden.

Vorzugsweise ist der Greifer so gesteuert, dass er beim Aufnehmen eines Etiketts über diesem abrollt. Dadurch wird vermieden, dass die Etiketten verrutschen und/oder verknittern. Außerdem können Greifelemente mit gekrümmter Oberfläche verwendet werden.

Vorzugsweise kann der Greifer zwei Etiketten in einander im Wesentlichen entgegen gesetzter Position aufnehmen. Dadurch lässt sich die Vorderseite und Rückseite der Flasche mit einem Einlegevorgang etikettieren.

Bei einer bevorzugten Ausführungsform umfasst die erfindungsgemäße Vorrichtung ferner eine Aufladevorrichtung zum elektrostatischen Aufladen der Etiketten, um diese an der Blasform anzuheften. Dies ermöglicht ein Anheften ohne zusätzliche Hilfsstoffe und vermeidet technisch aufwändige und ggf. störende Ansaugdüsen und -kanäle in den Blasformen.

Vorzugsweise ist die Einlegevorrichtung unter einem Einlaufstern oder einem Auslaufstern des Blasrads angeordnet und mit diesem gekoppelt. Dies spart Platz und beansprucht nur einen vergleichsweise geringen Maschinenwinkelbereich für das Einlegen der Etiketten bzw. verringert den für das Blasen der Flaschen verfügbaren Winkelbereich nur geringfügig.

Bei einer weiteren vorteilhaften Ausführungsform ist die Einlegevorrichtung als separater Übergabestern ausgebildet und zwischen dem Einlaufstern und dem Auslaufstern des Blasrads angeordnet. In diesem Fall können herkömmliche Ein- und Auslaufsterne auch bei einer Nachrüstung der erfindungsgemäßen Vorrichtung verwendet werden.

Bei einer weiteren vorteilhaften Ausführungsform ist die Einlegevorrichtung am Blasrad, insbesondere an, zwischen oder über den Blasformen angeordnet. Dies vereinfacht die Ausrichtung der Greifer in der Blasform beim Einlegen der Etiketten, da die Gelenkarme und die Blasformen um eine gemeinsame Achse rotieren.

Die Aufgabe wird außerdem gelöst durch ein Etikettierverfahren zum Etikettieren von Kunststoffbehältern in der Blasform in einer Rundläufer-Blasmaschine, bei dem die erfindungsgemäße Vorrichtung verwendet wird, und das durch folgende Schritte gekennzeichnet ist: Bestücken eines Greifers mit mindestens einem Etikett; Einschwenken des bestückten Greifers in eine Blasform und Zentrieren des Greifers in der Blasform durch Einrasten des Greifers an der Blasform oder deren Formträger; Spreizen des Greifers und Anheften des Etiketts an der Blasform, während die zentrierte Position des Greifers beibehalten wird; und Ausschwenken des Greifers aus der Blasform.

Dadurch kann die Etikettierung mit hoher Präzision und bei geringem Zeitaufwand erfolgen.

Vorzugsweise wird der Greifer beim Aufnehmen des Etiketts gewendet. Dadurch kann der Greifer beidseitig aus einem außerhalb der Bahn des Greifers angeordneten Magazin bestückt werden. Diese Anordnung ist besonders einfach zu realisieren und erlaubt einen problemlosen Zugang zu den Magazinen auch während der Produktion.

Vorzugsweise ist das Etikett mit einem thermosensitiven Kleber beschichtet, und dieser wird durch abschnittsweises Erhitzen der Blasform aktiviert.

Dies ermöglicht eine unkomplizierte Handhabung der Etiketten im Magazin, bei der Etikettenentnahme und beim Einlegen.

Bevorzugte Ausführungsformen der Erfindung sind in der Zeichnung dargestellt und nachstehend erläutert. Es zeigen:
- Figur 1: eine schematische Draufsicht auf eine erste Ausführungsform;
- Figur 2: eine Schrägansicht eines Gelenkarms der Einlegevorrichtung;
- Figur 3: eine Draufsicht auf einen in der Blasform positionierten Greifer;
- Figur 4: eine schematische Draufsicht auf einen Gelenkarm einer zweiten Ausführungsform;
- Figur 5: eine schematische Seitenansicht eines Gelenkarms einer dritten Ausführungsform

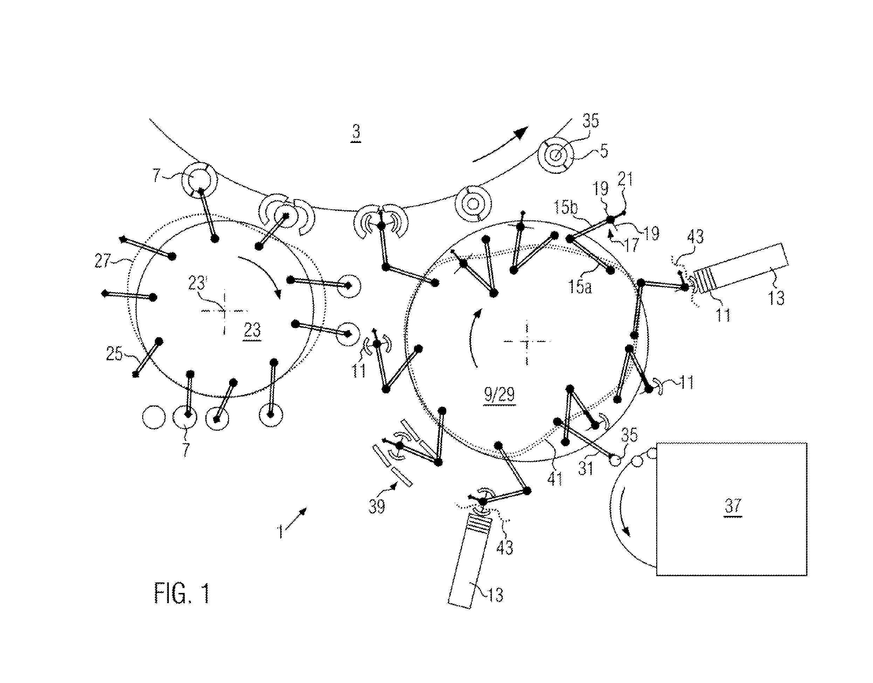

Wie Figur 1 erkennen lässt, umfasst eine erste Ausführungsform der erfindungsgemäßen Vorrichtung 1 ein Blasrad 3 mit mehreren Blasformen 5 zum Blasen von Kunststoffbehältern 7, wie z. B. Flaschen, insbesondere von PET-Flaschen, sowie eine rotierende Einlegevorrichtung 9 zum Entnehmen von Etiketten 11 aus stationären Etikettenmagazinen 13 und Einlegen der Etiketten 11 in die geöffneten Blasformen 5 mit Hilfe von drehbar an der Einlegevorrichtung 9 gelagerten Gelenkarmen 15. An diesen ist wiederum jeweils ein Greifer 17 mit Greifelementen 19 und einer Zentrierspitze 21 zum mittigen Ausrichten des Greifers 17 in der geöffneten Blasform 5 drehbar gelagert. An der Einlegevorrichtung 9 sind ferner die Steuerkurve 41 zum Schwenken der Gelenkarme 15 und die Steuerkurve 43 zum Drehen der Etikettierköpfe 17 vorgesehen.

Die Vorrichtung 1 umfasst ferner einen Auslaufstern 23, wie z. B. einen Teilungsverzugsstern, mit drehbar gelagerten und in der Hebellänge veränderlichen Greifarmen 25 zur Entnahme der fertig geblasenen Flaschen 7. Die Greifarme 25 werden in üblicher Weise durch eine Steuerkurve 27 gesteuert.

Über der Einlegevorrichtung 9 ist vorzugsweise koaxial ein Einlaufstern 29, wie z. B. ein Teilungsverzugsstern, angeordnet. An diesem sind analog zum Auslaufstern 27 über eine (der Übersichtlichkeit halber in Fig. 1 nicht dargestellte) Steuerkurve 33 gesteuerte Greifarme 31 zum Entnehmen von Vorformlingen 35 aus einem Ofen 37 und zum Einbringen der Vorformlinge 35 in die Blasformen 5 vorgesehen.

Im Beispiel teilen sich die Einlegevorrichtung 9 und der Einlaufstern 29 eine rotierende Grundplatte, auf deren Unterseite die Gelenkarme 15 und auf deren Oberseite die Greifarme 31 montiert sind. Entsprechend sind die Steuerkurve 41 unterhalb der Gelenkarme 15 und die Steuerkurve 33 oberhalb der Greifarme 31 als Kurvenscheiben ausgebildet. In Fig. 1 sind die Gelenkarme 15 vereinfachend vollständig mit durchgezogen Linien dargestellt.

Die Vorrichtung 1 umfasst weiterhin eine Aufladevorrichtung 39, wie z. B. eine oder mehrere Hochspannungselektroden, zum elektrostatischen Aufladen der Etiketten 11.

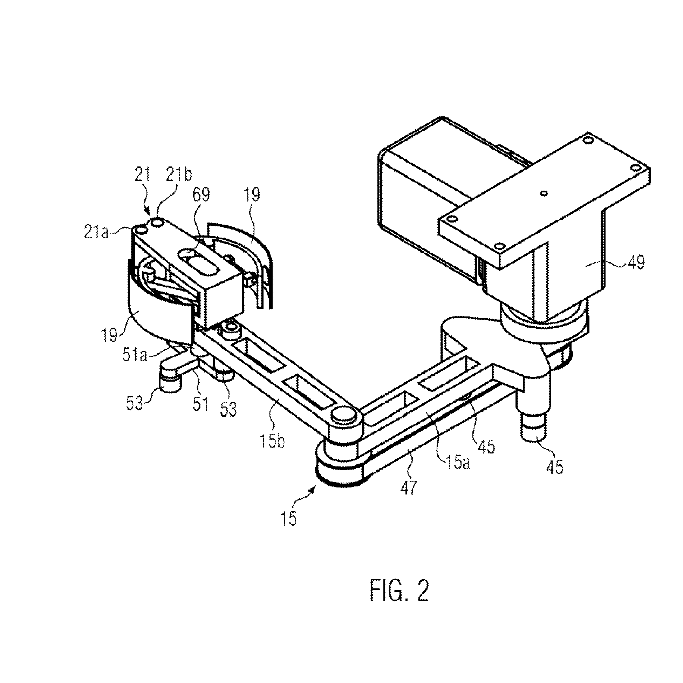

Fig. 2 verdeutlicht die Funktionsweise des Gelenkarms 15. Demnach ist der Gelenkarm 15 als sogenannter SCARA-Arm ausgebildet, bestehend aus einem inneren Arm 15a und einem äußeren Arm 15b, und mit dem Greifer 17 insgesamt dreigliedrig. Die Stellung des inneren Arms 15a wird über zwei Kurvenrollen 45 und die zweibahnige Steuerkurve 41 gesteuert. Der äußere Arm 15b wird über einen Riementrieb 47 von einem Servomotor 49 angetrieben. Die Drehlage des Greifers 17 wird im Ausführungsbeispiel von einem Drehkreuz 51 mit vier Rollen 53 und den Steuerkurven 43 gesteuert. Um Fliehkräfte zu minimieren sind die Gelenkarme 15 und Greifer 17 bevorzugt in Leichtbauweise ausgeführt.

Zum Drehen des Greifers 17 könnte an diesem alternativ nur eine Rolle 53 oder eine Nocke mit einer Übersetzung vorgesehen sein, wie z.B. bei einer Kombination von Zahnrad und Zahnstange oder einem Ausleger, ein zusätzlicher Servomotor oder ein pneumatischer Antrieb. Bei einem aktiven Drehmechanismus können die Steuerkurven 43 entfallen.

Pro Umdrehung der Einlegevorrichtung 9 wird der Greifer 17 um insgesamt 360° bzw. zweimal 180° gedreht, damit die einander gegenüber liegenden Greifelemente 19 die Etiketten 11 jeweils von einem außerhalb der Bahnkurve der Greifer 17 angeordneten Magazin 13 aufnehmen können. Alternativ könnte jedoch ein Magazin 13 innen liegend angeordnet werden, so dass der Greifer 17 zwischen den Magazinen 13 nicht um 180° gewendet werden muss. Die Greifelemente 19 können so ausgebildet sein, dass der Greifer 17 ein einzelnes Etikett 11, zwei gleiche oder zwei verschiedene Etiketten 11 aufnehmen kann.

Außerdem wird der Greifer 17 während des Aufnehmens der Etiketten 11 von den Steuerkurven 43 gedreht, so dass die Greifelemente 19 über den Etiketten 11 kontrolliert abrollen. Dadurch wird zum Einen vermieden, dass die Etiketten 11 verrutschen und/oder verknittern. Zum Anderen verbessert dies die Etikettenübergabe an das gekrümmte Greifelement 19. Dessen Krümmung entspricht im Wesentlichen dem Negativ desjenigen Abschnitts der Blasform 5, an den ein Etikett 11 angeheftet werden soll. Dies gewährleistet eine ausreichende Haftung der elektrostatisch aufgeladenen Etiketten 11 an der Blasform 5.

Zusätzlich könnten die Greifelemente 19 elastisch ausgeführt sein, z. B. in Form von Saugnäpfen, oder elastisch gelagert sein, um während des Abrollens einen ausreichenden und möglichst gleichmäßigen Kontakt zum Etikett 11 sicherzustellen. Dies wirkt dem Umstand entgegen, dass die Etiketten 11 im Magazin 13 plan vorliegen, während die Greifelemente 19 auf einer Kreisbahn am Magazin 13 entlang geführt werden und sich somit dem Etikett 11 tangential nähern. Alternativ oder ergänzend kann die kreisförmige Bahnkurve der Greifelemente 19 entlang der Etiketten 11 zumindest teilweise in eine lineare Bewegung überführt werden. Die Greifelemente 19 könnten dazu exzentrisch ausgebildet sein und/oder die Gelenkarme 15 könnten eine geeignete Gegenbewegung ausführen.

Um die Entnahme der Etiketten 11 zu erleichtern, kann an der Übergabestelle, z. B. unterhalb der Magazine 13, eine (nicht gezeigte) Entladungseinheit, z. B. eine lonisationsvorrichtung, vorgesehen sein. Diese begünstigt zudem eine reproduzierbare Aufladung der Etiketten 11 durch die Aufladevorrichtung 39.

Eine besonders vorteilhafte Ausnutzung des Bauraums ergibt sich, wenn ein Etikettenmagazin 13 zwischen dem Blasrad 3 und dem Ofen 37 und ein weiteres Magazin 13 zwischen dem Ofen 37 und den Elektroden 39 angeordnet ist.

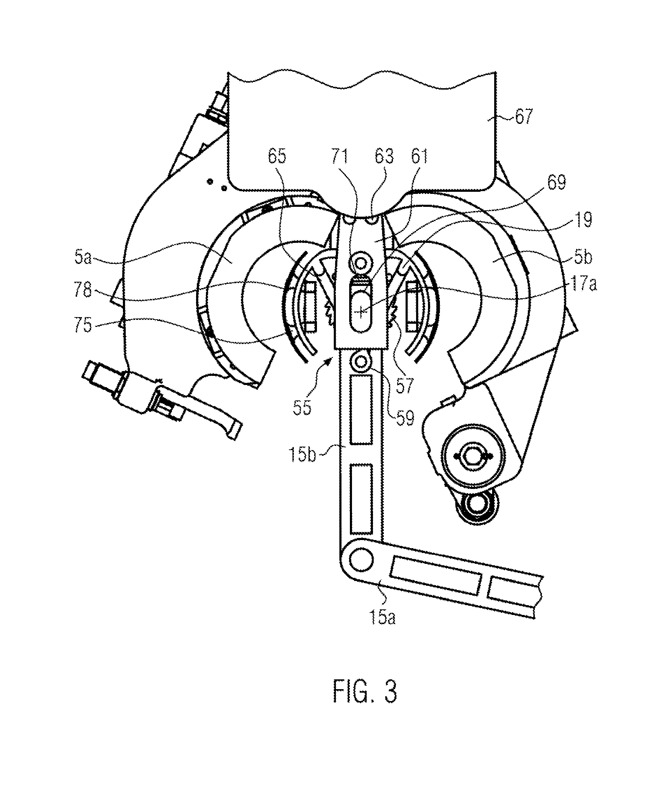

Wie aus Fig. 3 hervorgeht, ist an dem Greifer 17 ein Verrieglungsmechanismus 55 vorgesehen, der die Drehlage des Greifers 17 arretiert, so dass die Zentrierspitze 21 des Greifers 17 mit dem äußeren Arm 15b im Wesentlichen fluchtet, solange weder der Greifer 17 durch die Steuerkurven 43 gedreht wird noch die Zentrierspitze 21 an der geöffneten Blasform 5 einrastet. Der Verriegelungsmechanismus 55 kann beispielweise als Ratsche mit einem Sägezahnrad 57 und einem Rasthebel 59 ausgeführt sein. Der Greifer 17 könnte jedoch auch von einem separaten Servomotor (nicht gezeigt) gedreht und bei Bedarf von diesem mit dem äußeren Arm 15b fluchtend fest gehalten werden.

Die Greifelemente 19 lassen sich in Richtung der Blasform 5 seitlich ausschwenken bzw. spreizen. Zu diesem Zweck sind die Greifelemente 19 in der oberen und unteren Grundplatte 61 des Greifers 17 jeweils über Stifte 63 drehbar gelagert und werden durch einen Hebelmechanismus 65 beispielsweise wie folgt betätigt:
In Figur 3 rastet die Zentrierspitze 21 mit Hilfe der beiden um die Stifte 63 gebildete Radien 21 a,b am Formträger 67 der Blasform 5 mittig zwischen den Formhälften 5a,b ein. Die Zentrierspitze 21 könnte jedoch eine beliebige Form aufweisen, die ein stabiles Einrasten an der Blasform 5 bzw. dem Formträger 67 erlaubt. Der Gelenkarm 15 wird anschließend überdrückt, d. h. er fährt nicht nur entlang der Kreisbahn der Blasform 5 mit, um seine mittige Position zwischen den Formhälften 5a,b zu halten, sondern verschiebt die Welle 51 a bzw. die Drehachse 17a des Greifers 17 in der Nut 69 gegen die Rückstellfeder 71, so dass die Greifelemente 19 in Form der gelochten Vakuumpaletten 73 und der Sauger 75 gegen die Formhälften 5a,b gedrückt werden. Die Greifelemente 19 können somit allein durch Krafteinwirkung des Gelenkarms 15 in Richtung der Zentrierspitze 21 bzw. durch Vorschub des äußeren Arms 15b aufgespreizt werden.

Es ist jedoch auch denkbar, den Greifer 17 mit einem Pneumatikzylinder oder einem Servomotor über einen gesonderten Mechanismus zu spreizen, um die mechanischen Belastungen beim Überdrücken des Gelenkarms 15 zu vermeiden oder um den Greifer 17 unabhängig von der Stellung der Arme 15a,b zu bewegen. Der Hebelmechanismus 65 könnte durch einen beliebigen Mechanismus ersetzt werden, der das Ausschwenken der Greifelemente 17 mit einem oder mehreren Hebeln, einer über eine Kulisse gesteuerten Drehbewegung oder einer daraus gebildeten Kombination bewirkt.

Die beiden Radien 21 a,b der Zentrierspitze 21 gewährleisten durch ihren Zweipunkt-Sitz auf dem Formträger 67 eine mittige und bezüglich des Blasrads 3 radiale Ausrichtung des Greifers 17 zwischen den Formhälften 5a,b. Aufgrund der kontinuierlichen Drehung des Blasrads 3 und der Einlegevorrichtung 9 während der Etikettenübergabe an die Blasform 5 muss der äußere Arm 15b dabei gegenüber dem Greifer 17 geringfügig um die Drehachse 17a geschwenkt werden. Der Verriegelungsmechanismus 55 ist daher so ausgelegt, dass der Gelenkarm 15 gegenüber dem an der Blasform 5 eingerasteten Greifer 17 so geschwenkt werden kann, dass der Greifer 17 während des Spreizens mittig und bezüglich des Blasrads 3 radial ausgerichtet ist.

Im Ausführungsbeispiel entnehmen die Greifelemente 19 die Etiketten 11 direkt aus den Etikettenmagazinen 13, wobei die gespeicherten Etiketten 11 bereits mit einem aktivierbaren Klebstoff versehen sind, vorzugsweise mit einem thermosensitiven Klebstoff, der bei Raumtemperatur keine feste Klebeverbindung eingeht. Dies ermöglicht eine besonders Platz sparende Etikettenaufnahme. Die Aktivierung des Klebstoffs kann z. B. durch in die Blasform 5 integrierte Heizelemente erfolgen, die von gekühlten Bereichen der Blasform 5 durch geeignete Sperrschichten isoliert sind und die Blasform 5 über den Etiketten 11 selektiv erhitzen.

Alternativ könnten die Etiketten 11 direkt durch die Sauger 75 bzw. geeignet geformte Saugnäpfe, ohne die gelochten Vakuumpaletten 73, in die Blasform 5 eingebracht werden. Der Klebstoff wird dann nur bereichsweise auf das Etikett 11 aufgebracht, beispielweise mit Hilfe eines Leimpalettenkarussells (nicht gezeigt), das die Etiketten 11 aus dem Magazin 13 entnimmt und partiell beleimt. Die Leimpaletten sind zu diesem Zweck so ausgeformt, dass sie dort, wo der Sauger 75 das Etikett 11 greift, keinen Klebstoff auftragen. Bevor der Sauger 75 das partiell beleimte Etikett 11 aufnehmen kann, muss es jedoch gewendet werden. Dazu dient beispielsweise ein (nicht gezeigter) herkömmlicher Greiferzylinder mit Vakuumgreifern oder mechanischen Greifern, der das Etikett 11 mit der nicht beleimten Seite vom Leimpalettenkarussell übernimmt und an den Greifer 17 weitergibt. Mit dieser Variante können auch Klebstoffe verwendet werden, die keine Aktivierung benötigen. Entsprechend sind in diesem Fall an der Blasform 5 keine zusätzlichen Aktivierungseinrichtungen wie Heizelemente nötig.

Alternativ zur partiellen Beleimung mit einem Leimpalettenkarussell können partiell selbstklebende Etiketten 11 von einem Trägerband in bekannter Weise an einer Ablösekante abgelöst und direkt von den Saugern 75 an nichtklebenden Freistellen aufgenommen werden. In diesem Fall entfällt die oben beschriebene, zusätzliche Einrichtung zum Wenden der Etiketten 11.

Außerdem könnten die Greifelemente 19 mit einer Klebstoff abweisenden Beschichtung versehen sein, um auch mit einem nicht aktivierbaren Klebstoff ganzflächig beleimte Etiketten 11 aufnehmen und einlegen zu können.

Die Etiketten 11 sind vor dem Einbringen in die Blasform 5 zumindest partiell mit einer der zu blasenden Flasche 7 zugewandten Klebeschicht versehen, um die Etiketten 11 während des Blasens mit den Flaschen 7 fest zu verbinden.

Die Übergabe der Etiketten 11 an die Blasform 5 erfolgt durch elektrostatische Anziehung zwischen den Etiketten 11 und den geerdeten oder entgegen gesetzt geladenen Blasformen 5 bei gleichzeitigem Abschalten des Vakuums an den Greifelementen 19. Alternativ könnten die Elektroden an den Blasformen auch durch eine Ansaugung angeheftet werden.

Die Aufladevorrichtung 39 ist bevorzugt stationär und erzeugt mit Hilfe einer oder mehrerer Hochspannungselektroden ein elektrisches Feld, das die Etiketten 11 mit den Greifern 17 durchlaufen. Alternativ könnten aber auch entsprechende Elektroden am Gelenkarm 15 angeordnet sein, um die Dauer der Aufladung und den Abstand der Elektroden vom Etikett 11 unabhängig von der Bewegung des Gelenkarms 15 zu optimieren.

Die Kopplung des Einlaufsterns 29 mit der Übergabevorrichtung 9 kann nicht nur durch eine gemeinsame Grundplatte realisiert werden sondern auch durch übereinander angeordnete und gemeinsam rotierende separate Sterne. In diesem Fall ist unter dem Einlaufstern 29 ein Übergabestern 9 koaxial um die gemeinsame Drehachse 29' angeordnet. Alternativ könnte die Übergabevorrichtung 9 in gleicher Weise mit dem Auslaufstern 23 kombiniert werden. Entscheidend ist, dass der Maschinenwinkelbereich zwischen der Entnahme der Flasche 7 und dem Einbringen des Vorformlings 35 effektiv genutzt wird bzw. die Phase, während der die Blasform 5 zum Einlegen des Etiketts 11 vollständig geöffnet werden muss, möglichst kurz ist. Mit der erfindungsgemäßen Vorrichtung 1 kann wie folgt gearbeitet werden:
Die sich mit dem Einlegestern 29 kontinuierlich drehende Einlegevorrichtung 9 führt einen bezüglich seiner Drehlage verriegelten und unbestückten Greifer 17 zum ersten Etikettenmagazin 13. Mit Hilfe der Steuerkurve 43 wird die Verriegelung des Greifers 17 überwunden, und das außen liegende Greifelement 19 rollt der Steuerkurve 43 folgend über einem Etikett 11 ab und saugt dieses an. Die Steuerkurve 43 dreht den Greifer 17 weiter, bis dieser gewendet und wieder verriegelt ist. Daraufhin entnimmt der über dem Greifer 17 gelagerte Greifarm 31 einen Vorformling 35 aus dem Auslaufrad des Ofens 37. Nach Erreichen der zweiten Steuerkurve 43 wird ein zweites Etikett 11 von dem zweiten, noch unbestückten Greifelement 19 wie zuvor beschrieben aufgenommen und der Greifer 17 weitergedreht, bis die Zentrierspitze 21 wieder mit dem äußeren Arm 15b fluchtet und von diesem weg weist. Anschließend durchfährt der verriegelte Greifer 17 die Aufladevorrichtung 39, um die Etiketten 11 elektrostatisch aufzuladen. Die aufgeladenen Etiketten 11 werden anschließend in eine geöffnete Blasform 5 geschwenkt, die Zentrierspitze 21 des Greifers 17 mittig zwischen den Formhälften 5a,b eingerastet und der Greifer 17 in dieser Position aufgespreizt, so dass die Greifelemente 19 die Etiketten 11 in Kontakt mit den Formhälften 5a,b bringen. Nach Abschalten des Vakuums an den Greifelementen 19 haften die Etiketten 11 durch elektrostatische Aufladung an der Blasform 5. Nach Einlegen des Vorformlings 35 mit dem Greifer 31 in die Blasform 5 wird die Flasche 7 auf bekannte Weise geblasen und mit dem Auslaufstern 23 entnommen.

Im folgenden werden weitere Ausführungsformen beschrieben, die sich von der ersten Ausführungsform im Wesentlichen dadurch unterscheiden, dass die Einlegevorrichtung 9 umfänglich am Blasrad 3 vorgesehen ist und koaxial mit dem Blasrad 3 um die Achse 3' rotiert. Auch bei diesen Ausführungsformen sind Einlauf- und Auslaufsterne 29, 23, mindestens ein stationäres Etikettenmagazin 13 mit zugehöriger Steuerkurve 43, eine Aufladevorrichtung 39 und ein Ofen 37 vorgesehen. Die Greifer 17 entsprechen denen der ersten Ausführungsform, soweit nicht davon abweichend beschrieben. Ebenso können Merkmale einzelner Ausführungsformen und deren Varianten kombiniert werden.

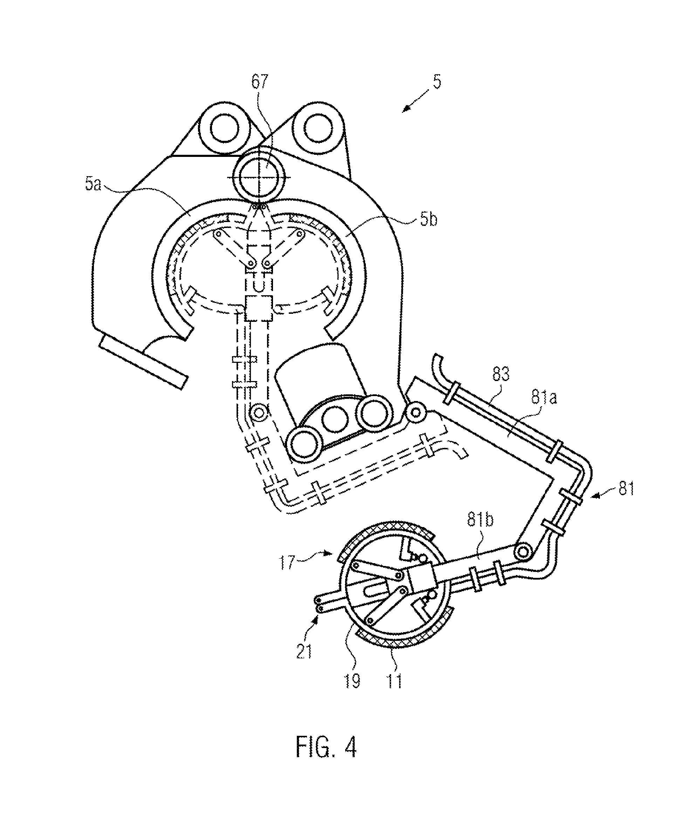

Wie Figur 4 zu entnehmen ist, sind die Gelenkarme 81 der zweiten Ausführungsform jeweils an einer Formhälfte 5b der Blasform 5 horizontal schwenkbar gelagert und umfassen ebenso einen inneren Arm 81 a, einen äußeren Arm 81 b und einen Greifer 17 mit einer Zentrierspitze 21 und Greifelementen 19. Zusätzlich gezeigt ist die Vakuumleitung 83 mit den Anschlüssen für die als Vakuumpaletten ausgeführten Greifelemente 19. Durchgezogen gezeichnet ist eine äußere Position des Gelenkarms 81 zur Bestückung der Greifelemente 19 mit den Etiketten 11 und ggf. zur Aufladung der Etiketten 11 sowie eine gestrichelt gezeichnete Position mit gespreiztem Greifer 17 und an der Blasform 5 anliegenden Etiketten 11. Wie in Fig. 4 gezeigt, ist der innere Arm 81 a vorzugsweise horizontal abgewinkelt.

Alternativ könnte der Gelenkarm 81 am Blasrad 3 zwischen den Blasformen 5 gelagert sein.

Da der Gelenkarm 81 hier gemeinsam mit der Blasform 5 um die Drehachse 3' des Blasrads 3 rotiert, muss der äußere Arm 81 b bei eingerasteter Zentrierspitze 21 nicht wie bei der ersten Ausführungsform relativ zum Greifer 17 geschwenkt werden. Die zweite Ausführungsform ist daher dann besonders vorteilhaft, wenn nur ein Etikett 11 auf der Flasche 7 anzubringen ist und ein Wenden des Greifers beim Bestücken entfällt, da die Verbindung zwischen äußerem Arm 81 b und Greifer 17 dann starr ausgeführt werden kann.

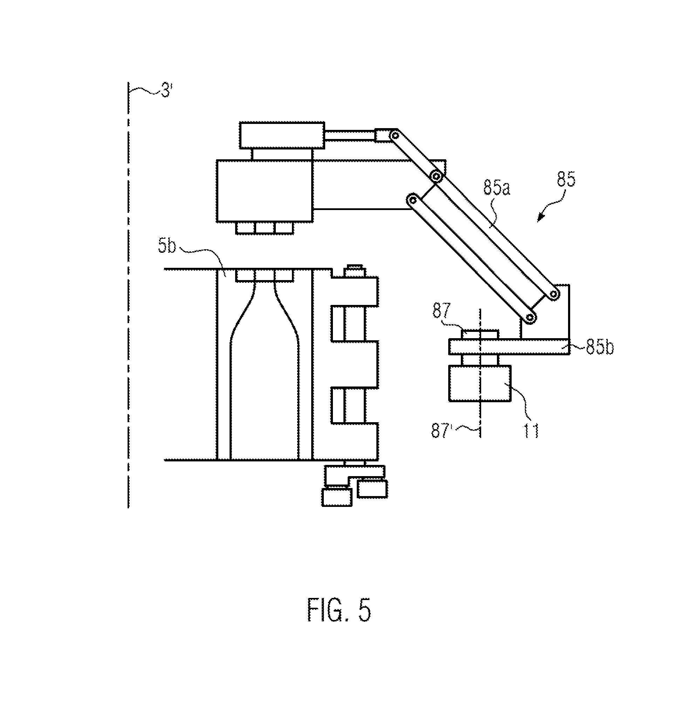

Eine dritte Ausführungsform unterscheidet sich gemäß Figur 5 von der zweiten Ausführungsform hauptsächlich dadurch, dass der Gelenkarm 85 auf dem Blasrad 3 über den Blasformen 5 angebracht ist und vertikal schwenkbar ist. Dabei besteht der innere bzw. obere Arm 85 bevorzugt aus einem Parallelhebel und der äußere bzw. untere Arm 85b aus einer horizontal ausgerichteten Aufnahmeplatte, in der der Greifer 87 für die Etiketten 11 um eine vertikale Achse 87' drehbar gelagert ist.

Bei dieser Ausführungsform ist es vorteilhaft, den Gelenkarm 85 nur kurzzeitig anzuheben, um den Einlauf- und Auslaufsternen 29, 23 auszuweichen. Dadurch lässt sich der effektive Drehradius der Einlegevorrichtung 9 und die verursachten Fliehkräfte sowie die Relativgeschwindigkeit zu den Etikettenmagazinen 13 minimieren.

## Patentansprüche

1. Etikettiervorrichtung (1) zum Etikettieren von Kunststoffbehältern in der Blasform in einer Rundläufer-Blasmaschine, mit:
- einem Blasrad (3) mit mehreren Blasformen (5);
- mindestens einem feststehenden Etikettenmagazin (13); und
- einer rotierenden Einlegevorrichtung (9) zum Einlegen von Etiketten (11) in die Blasformen (5),
**dadurch gekennzeichnet, dass**
die Einlegevorrichtung (9) Gelenkarme (15, 81, 85) umfasst, an denen jeweils ein Greifer (17) gelagert ist.

2. Vorrichtung nach Anspruch 1, **dadurch gekennzeichnet, dass** der Greifer (17) gegen die Blasform (5) schwenkbare Greifelemente (19) umfasst.

3. Vorrichtung nach Anspruch 2, **dadurch gekennzeichnet, dass** die Greifelemente (19) als Negativ eines Abschnitts der Blasform (5) ausgeformt sind.

4. Vorrichtung nach mindestens einem der vorigen Ansprüche, **dadurch gekennzeichnet, dass** der Greifer (17) eine Zentrierspitze (21) umfasst, die den Greifer (17) in der Blasform (5) mittig ausrichtet.

5. Vorrichtung nach mindestens einem der vorigen Ansprüche, **dadurch gekennzeichnet, dass** die Drehlage des Greifers (17) beim Einschwenken in die Blasform (5) bezüglich des Gelenkarms (15) fixierbar ist.

6. Vorrichtung nach mindestens einem der vorigen Ansprüche, **dadurch gekennzeichnet, dass** die Einlegevorrichtung (9) so eingerichtet ist, dass sie die Etiketten (11) direkt aus dem Etikettenmagazin (13) entnimmt.

7. Vorrichtung nach mindestens einem der vorigen Ansprüche, **dadurch gekennzeichnet, dass** der Greifer (17) so gesteuert ist, dass er beim Aufnehmen eines Etiketts (11) über diesem abrollt.

8. Vorrichtung nach mindestens einem der vorigen Ansprüche, **dadurch gekennzeichnet, dass** der Greifer (17) zwei Etiketten (11) in einander im Wesentlichen entgegen gesetzter Position aufnehmen kann.

9. Vorrichtung nach mindestens einem der vorigen Ansprüche, ferner **gekennzeichnet durch** ein Aufladevorrichtung (39) zum elektrostatischen Aufladen der Etiketten (11) um diese an der Blasform (5) anzuheften.

10. Vorrichtung nach mindestens einem der vorigen Ansprüche, **dadurch gekennzeichnet, dass** die Einlegevorrichtung (9) unter dem Einlaufstern (29) oder dem Auslaufstern (23) des Blasrads (3) angeordnet und mit diesem gekoppelt ist.

11. Vorrichtung nach mindestens einem der Ansprüche 1 bis 9, **dadurch gekennzeichnet, dass** die Einlegevorrichtung (9) als separater Übergabestern ausgebildet und zwischen dem Einlaufstern (29) und dem Auslaufstern (23) des Blasrads (3) angeordnet ist.

12. Vorrichtung nach mindestens einem der Ansprüche 1 bis 9, **dadurch gekennzeichnet, dass** die Einlegevorrichtung (9) am Blasrad (3), insbesondere an, zwischen oder über den Blasformen (5) angeordnet ist.

13. Etikettierverfahren zum Etikettieren von Kunststoffbehältern in der Blasform (5) in einer Rundläufer-Blasmaschine, unter Verwendung der Vorrichtung (1) nach einem der vorigen Ansprüche, **gekennzeichnet durch** folgende Schritte:
a) Bestücken eines Greifers (17) mit mindestens einem Etikett (11);
b) Einschwenken des bestückten Greifers (17) in eine Blasform (5) und Zentrieren des Greifers (17) in der Blasform (5) **durch** Einrasten des Greifers (17) an der Blasform (5) oder deren Formträger (67);
c) Spreizen des Greifers (17) und Anheften des Etiketts (11) an der Blasform (5), während die zentrierte Position des Greifers (17) beibehalten wird; und
d) Ausschwenken des Greifers (17) aus der Blasform (5).

14. Verfahren nach Anspruch 13, **dadurch gekennzeichnet, dass** der Greifer (17) beim Aufnehmen des Etiketts (11) gewendet wird.

15. Verfahren nach Anspruch 13 oder 14, **dadurch gekennzeichnet, dass** das Etikett (11) mit einem thermosensitiven Kleber beschichtet ist und dieser durch abschnittsweises Erhitzen der Blasform (5) aktiviert wird.
